# EUROPÄISCHE PATENTANMELDUNG

(11) **EP 4 748 736 A2**
(43) Veröffentlichungstag der Anmeldung: **27.05.2026**
(21) Anmeldenummer: 25217635.9
(22) Anmeldetag: 21.11.2025
(51) Int. Cl.: B65D 1/24, B65D 1/46, B65D 25/30, B29C 33/00, B29C 45/26

(54) **TRANSPORTBEHÄLTER UND DESSEN HERSTELLUNG**

(30) Priorität: 22.11.2024 DE 102024134478
(71) Anmelder: Oberland M & V GmbH, 88410 Bad Wurzach (DE)
(72) Erfinder: Diedrich, Jannis, 88410 Bad Wurzach (DE); Kurrle, Maximilian, 88410 Bad Wurzach (DE)
(74) Vertreter: Simmons & Simmons LLP (Munich)

(57) **Zusammenfassung**

Die vorliegende Erfindung betrifft einen Transportbehälter (1) mit Behälterrahmen (2) und Behälterboden (3), wobei der Behälterrahmen (2) und der Behälterboden (3) einen Behälterinnenraum (4) festlegen, wobei der Behälterrahmen (2) Seitenwände (21, 22) des Transportbehälters (1) ausbildet, von denen mindestens zwei gegenüberliegende Seitenwände (21, 22) mit einem Tragegriff (5, 6) und mit einem daran angrenzenden Durchgriffsloch (7, 8) versehen sind, und wobei der Tragegriff (5, 6) zumindest an seiner zum Behälterinnenraum (4) weisenden Seitenfläche (5a; 6a) eine Vielzahl an Vertiefungen (51; 61) aufweist, die zumindest vier sechs- oder mehreckige Hohlräume (51a; 61a) umfasst, deren jeweilige Innenoberfläche zumindest teilweise eine Kugelsegmentform ausbildet. Ferner betrifft die vorliegende Erfindung ein entsprechendes Spritzgussverfahren sowie ein entsprechendes Spritzgusswerkzeug.

## Beschreibung

Die vorliegende Erfindung betrifft einen Transportbehälter gemäß dem Oberbegriff von Anspruch 1, der von einem Benutzer anhand von an dem Transportbehälter vorgesehenen Tragegriffen getragen werden kann. Ferner betrifft die vorliegende Erfindung ein Spritzgussherstellungsverfahren sowie ein Spritzgusswerkzeug zur Herstellung eines derartigen Transportbehälters.

### Stand der Technik

Es sind auf verschiedenen technischen Gebieten Transportbehälter bekannt, die aus Kunststoff in einem Spritzgussverfahren hergestellt sind und üblicherweise eine Bodenwand sowie vier Seitenwände haben, wobei immer zwei Seitenwände gegenüberliegend angeordnet sind. Um derartige Transportbehälter transportieren zu können, sind üblicherweise in zumindest zwei der Seitenwände Tragegriffe mit jeweils einem daran angrenzenden Durchgriffsloch vorgesehen, so dass ein Benutzer den Transportbehälter an den Tragegriffen greifen kann, wobei sich die Finger des Benutzers durch das jeweilige Durchgriffsloch hindurch erstrecken und an der Innenseite des Tragegriffs zum Anliegen kommen. Dadurch wird ein festes Greifen des Transportbehälters durch den Benutzer ermöglicht.

Es gibt jedoch Transportbehälter, mit denen durchaus schwere Güter direkt vom Endabnehmer transportiert werden müssen. So ist es zum Beispiel im Getränkehandel üblich, in Flaschen abgefüllte Getränke in definierten Gebindegrößen vorzuhalten und zu vertreiben. Die charakteristischen Gebindegrößen stellen hierbei Flaschenkästen, üblicherweise hergestellt aus einem Kunststoff, mit einer größeren Anzahl von Flaschen dar, so zum Beispiel 20 oder 24 Stück Flaschen. Ein mit gefüllten Flaschen bestückter Flaschenkasten kann dabei ein Gewicht von 15 - 20kg erreichen, ein Gewicht also, das für den Endabnehmer je nach Alter und/oder Geschlecht durchaus in einen problematischen Bereich fallen kann. Um entsprechend das Gewicht für den Endabnehmer zu verringern wurde auf diesem technischen Gebiet bereits versucht, zumindest das Gewicht des Flaschenkastens selbst gering zu halten, was in der Regel durch materialarme Boden- und Seitenwände umgesetzt wird.

Bei Flaschenkästen sind für den vereinfachten Transport die Tragegriffe möglichst nahe unter der oberen Kante der Seitenwände angeordnet und sind daher starken Belastungen ausgesetzt, da sich beim Tragen von Hand das gesamte Gewicht des Flaschenkastens auf einen oder zwei vom Benutzer ergriffenen Tragegriffe verteilt. Dadurch kann es vorkommen, dass Tragegriffe beim Tragen eines vollen Flaschenkastens ausreißen, wodurch es zu erheblichen Verletzungen des Benutzers kommen kann. Diese Problematik wird noch dadurch verstärkt, dass Flaschenkästen üblicherweise von der Bodenseite aus angespritzt werden. Dadurch kommt es dazu, dass die Fließfronten des in das Spritzgusswerkzeug eingebrachte Kunststoffmaterials genau am Ort der mittig in den Seitenwänden liegenden Tragegriffe aufeinandertreffen, so dass dort eine strukturell schwache Bindenaht entsteht, die bereits bei geringerer Belastung aufbrechen kann.

Es besteht also seit geraumer Zeit ein Bedarf für Transportbehälter, deren Tragegriffe eine strukturelle Verstärkung erfahren. Beispielsweise ist es bekannt, einen Bereich direkt über dem Handgriffloch zu verstärken, wie es beispielsweise aus der DE 199 36 229 A1 oder der DE 38 23 650 A1 bekannt ist. Dies führt jedoch nicht zu einer ausreichenden Stärkung des Tragegriffs. Zudem ist es aus den Dokumenten DE 103 28 392 A1 oder DE 40 39 058 A1 bekannt, dass umspritzte Einlegeteile zur Verstärkung des Tragegriffs genutzt werden. Diese Herangehensweise ist jedoch produktionstechnisch nachteilig bzw. mit hohem Aufwand verbunden. Ferner sind insbesondere bei Flaschenkästen Lamellengriffe bekannt, die die Stabilität des Tragegriffs verbessern sollen, so zum Beispiel aus der DE 296 23 732 U1 oder aus der EP 0 260 698 A1. Die Stabilität von Lamellengriffen ist jedoch oft noch unzufriedenstellend, da die Lamellengriffe keine ausreichende Profilsteifigkeit des Tragegriffs erreichen. Außerdem werden Lamellengriffen von einigen Benutzern mit einem unangenehmen bzw. einschneidenden Greifgefühl in Verbindung gesetzt. Um die Stabilität des Tragegriffs entsprechend zu erhöhen, wurden u.a. in DE 10 2005 026 112 B4 Tragegriffe offenbart, die mit einer Vielzahl von aneinandergrenzenden kleinen Hohlräumen versehen sind, welche geometrischen Formen nachempfunden sind, so zum Beispiel Waben, Rauten oder auch Kreisen. Nachteilig bei dieser Umsetzung sind jedoch beispielsweise die kleine Größe der Hohlräume, da hierbei die Finger eines den Kasten ergreifenden Benutzers immer auf mehreren der Hohlraumbegrenzungen aufliegen, die Fingerkuppen also teilweise die Hohlräume bedecken und entsprechend keine durchgehende bzw. gerade Auflagefläche zwischen Fingerkuppen und Tragegriffmaterial erreicht wird. Außerdem führt die kleine Größe der Hohlräume neben Problemen bei der Reinigung der Kästen, da sich Verschmutzungen und kleine Gegenstände in den Hohlräumen ansammeln können und durch den Raummangel nur schlecht wieder entfernen lassen, auch zu einer wesentlichen Verschlechterung der Herstellungszykluszeit des einzelnen Kastens beim Spritzgießen, da die Entformungstemperatur an den Tragegriffen nur langsam abnimmt, ein Abkühlen des spritzgegossenen Kastens also länger dauert als bei einem Tragegriff ohne Hohlräume.

### Offenbarung der Erfindung

Es ist somit die Aufgabe der vorliegenden Erfindung, eine Lösung vorzuschlagen, mit der ein Transportbehälter mit hoher Profilsteifigkeit und hoher Gesamtfestigkeit im Griffbereich bereitgestellt werden kann, der sich durch kurze Herstellungszykluszeit und verbesserte Reinigungsfähigkeit auszeichnet. Es besteht außerdem ein Bedarf für ein entsprechendes Spritzgussherstellungsverfahren sowie ein entsprechendes Spritzgusswerkzeug, die dazu geeignet sind, den erfindungsgemäßen Transportbehälter zu ermöglichen. Die vorliegende Erfindung stellt entsprechend nicht nur einen Transportbehälter sondern zusätzlich auch ein Spritzgussherstellungsverfahren sowie ein Spritzgusswerkzeug bereit, die die oben genannte Aufgabenstellung lösen.

Gemäß einer bevorzugten Ausführungsform der vorliegenden Erfindung wird ein Transportbehälter, vorzugsweise ein Flaschenkasten zur Aufnahme von Flaschen oder Flaschengebinden, bereitgestellt, der einen Behälterrahmen und einen Behälterboden umfasst. Der Behälterrahmen und der Behälterboden legen dabei einen Behälterinnenraum fest. Der Behälterrahmen bildet Seitenwände des Behälters aus, von denen mindestens zwei gegenüberliegende Seitenwände mit einem Tragegriff und mit einem daran angrenzenden Durchgriffsloch versehen sind. Für den Fall, dass der Transportbehälter als Kasten bzw. Flaschenkasten ausgebildet ist, wird an dieser Stelle von Kastenrahmen, Kastenboden und Kasteninnenraum gesprochen. Bei dem erfindungsgemäßen Transportbehälter hat jeder Tragegriff zumindest an seiner zum Innenraum weisenden Seitenfläche eine Vielzahl an Vertiefungen. Die Vertiefungen umfassen zumindest vier sechs- oder mehreckige Hohlräume, vorzugsweise an einer Seite offene Hohlräume, deren jeweilige Innenoberfläche zumindest teilweise eine Kugelsegmentform ausbildet, also zumindest zum Teil der Form eines Kugelsegments nachgebildet ist. Insbesondere ist dabei der Boden der jeweiligen Vertiefung der Kugelsegmentform nachempfunden, wobei auch die gesamte Vertiefungsinnenoberfläche der Kugelsegmentform nachempfunden sein kann. Ein Kugelsegment hat dabei die Form einer Kuppel und besitzt als Grundfläche eine Kreisscheibe. Vorzugsweise handelt es sich bei der Kugelsegmentform um eine Form, die eine Kugelkalotte nachbildet. Eine Kugelkalotte, auch Kugelkuppel genannt, ist ein Hohlkörper, der entsteht, wenn man durch eine hohle Kugel eine Schnittebene legt. Die Oberfläche der Kalotte ist der gekrümmte Teil der verbleibenden Kugeloberfläche. Durch die Formgebung der Innenoberfläche der Vertiefungen gemäß einer Kugelkalotte kann eine bessere Kühlfähigkeit des eingespritzten Kunststoffs aufgrund der größeren Oberflächenanlage erzielt werden, da bei der Herstellung des Transportbehälters mit einer größeren Kühlfläche bzw. Werkzeuganlagefläche gearbeitet werden kann.

Gemäß einer Weiterbildung des erfindungsgemäßen Transportbehälters ist jede Vertiefung von stegartigen Wänden bzw. Stegwänden umgeben. Die Stegwände zeigen eine kurze Gestalt, so dass die Hebelärme der Drehmomente im Tragegriff verkürzt werden, wodurch eine höhere Profilsteifigkeit des gesamten Tragegriffs erzielt werden kann.

Gemäß einer weiteren Weiterbildung des erfindungsgemäßen Transportbehälters sind die zumindest vier der sechs- oder mehreckigen Hohlräume einem Kreisbogen folgend zueinander angeordnet. Das bedeutet, dass die Mittelpunkte dieser vier sechs- oder mehreckigen Hohlräume auf einem Kreisbogen liegen. Entsprechend können die Fingerkuppen einer den Tragegriff ergreifenden Hand in die Hohlräume eingreifen, da die Fingerkuppen einer den Tragegriff umgreifenden Hand ebenfalls auf einem annähernden Kreisbogen liegen. Dies ist bedingt durch die Tatsache, dass die mittleren beiden Finger, also der Mittelfinger und der Ringfinger, der Normhand länger als die beiden verbleibenden Finger sind und sich daher weiter um den Tragegriff herum erstrecken. Durch die Kreisbogenanordnung wird eine ergonomisch angenehme Verteilung der Fingerkuppen in den vier sechs- oder mehreckigen Hohlräumen erreicht.

Gemäß einer weiteren Weiterbildung des erfindungsgemäßen Transportbehälters bildet jeder der zumindest vier der sechs- oder mehreckigen Hohlräume eine Fingermulde aus. Entsprechend dienen diese als Fingermulden wirkenden vier sechs- oder mehreckigen Hohlräume dazu, dass jede der Fingerkuppen eines den Transportbehälter ergreifenden Benutzers, also dessen Zeigefinger, Mittelfinger, Ringfinger und kleiner Finger, in einer Fingermulde aufliegt, so dass eine durchgehende bzw. gerade Auflagefläche zwischen Fingerkuppen und Tragegriffmaterial erreicht wird.

Gemäß einer weiteren Weiterbildung des erfindungsgemäßen Transportbehälters weist jeder der zumindest vier der sechs- oder mehreckigen Hohlräume einen minimalen Umkreisdurchmesser von 20 mm auf. Dies dient dazu, dass jede Fingerkuppe einer sogenannten "Normhand" ohne Probleme in die jeweilige Fingermulde eingreifen und darin aufliegen kann. Ferner haben dabei die Finger der Normhand zueinander aus ergonomischen Gründen einen ausreichenden Abstand. Die Normhand ist dabei eine standardisierte Handgröße zur Beurteilung von z.B. Handschuhgrößen, Werkzeuggriffen oder ergonomischen Standards, und dient als Referenzwert, um Produkte so zu gestalten, dass sie für die durchschnittliche Handgröße komfortabel und sicher nutzbar sind. Die Maße der hier verwendeten Normhand basieren gemäß DIN 33402-2 auf statistischen Durchschnittswerten der Handgrößen sowie der zugehörigen Normfinger in der Bevölkerung. Diese Werte werden beispielweise in der Herstellung von Handschuhen, Handwerkzeugen, Tastaturen und anderen Produkten genutzt, um eine möglichst breite Nutzbarkeit zu gewährleisten. Die Normhand ist besonders wichtig in der Ergonomie und im Arbeits- und Gesundheitsschutz. Normen wie die DIN EN 420 (Schutzhandschuhe) definieren oft bestimmte Abmessungen, um Produkte besser an die Bedürfnisse einer "durchschnittlichen" Hand anzupassen. Breite und Länge des Zeigefingers sind für die Finger der Normhand die kennzeichnenden anthropometrischen Maße. Legt man für die Fingerbreite das 5. Perzentil zu Grunde, so weist DIN 33402-2 (2005) auf der Grundlage vergleichsweise aktueller Messungen folgende Werte für die körperferne Zeigefingerbreite aus:
5. Perzentil, Frauen: 14 mm
5. Perzentil, Männer: 17 mm

Unter Hinzuzählen eines ausreichenden Sicherheitsabstands zwischen Fingerkuppe und Fingermuldenseitenwand sollte ein minimaler Umkreisdurchmesser jedes der zumindest vier der sechs- oder mehreckigen Hohlräume von 20 mm entsprechend ausreichen, um eine sichere und angenehme Auflage der Fingerkuppen zu ermöglichen.

Gemäß einer weiteren Weiterbildung des erfindungsgemäßen Transportbehälters weist die Vielzahl an Vertiefungen ferner zumindest einen spitzrautenförmig ausgebildeten Hohlraum, d.h. einen als Spitzraute geformte Hohlraum auf. Der spitzrautenförmig ausgebildeten Hohlraum grenzt unter der Vielzahl der Hohlräume an zwei der zumindest vier der sechs- oder mehreckigen Hohlräume an. Ferner ist der spitzrautenförmig ausgebildeten Hohlraum in der Mitte des Tragegriffs mit seiner längsten Dimension quer zur Längserstreckung des Tragegriffs angeordnet. Die längste Dimension der Spitzraute, also deren am weitesten voneinander entfernten Spitzen, erstrecken sich in einer Richtung, die quer zur Längsrichtung des Tragegriffs verläuft. Anders gesagt: Die längste Dimension der Spitzraute, also deren am weitesten voneinander entfernten Spitzen, liegt auf der quer zur Längsrichtung des Tragegriffs verlaufenden Bindenaht. Darüber hinaus kann der spitzrautenförmig ausgebildeten Hohlraum ebenfalls eine Innenoberfläche aufweisen, die einer Kugelsegmentform nachfolgend ausgebildet ist, also der Form eines Kugelsegments nachgebildet ist, mit dem identischen Vorteilen wie bei den sechs- oder mehreckigen Hohlräumen, d.h. eine bessere Kühlfähigkeit des eingespritzten Kunststoffs aufgrund der größeren Oberflächenanlage, da mit einer größeren Kühlfläche bzw. Werkzeuganlagefläche gearbeitet werden kann.

Gemäß einer weiteren Weiterbildung des erfindungsgemäßen Transportbehälters weist die Vielzahl an Vertiefungen ferner zumindest einen teilgeschnittenen Hohlraum auf, dessen angedachte Form nur zum Teil ausgebildet ist und der an dessen geschnittener Seite durch eine die Außenform des Tragegriffs festlegende Stegwand begrenzt ist. Entsprechend gibt es gemäß dieser Weiterbildung neben den vollständig ausgebildeten sechs- oder mehreckigen Hohlräumen sowie neben dem optionalen spitzrautenförmig ausgebildeten Hohlraum weitere Hohlräume, deren angedachte Form, beispielsweise eine sechs- oder mehreckige Form, nicht vollständig ausgeführt ist, sondern beispielsweise nur eine Hälfte oder ein Drittel der angedachten sechs- oder mehreckige Form einnimmt. Ein derartiger geschnittener bzw. seitlich "offener" Hohlraum wird durch die Stegwand begrenzt, die die Außenform des gesamten Tragegriffs festlegt.

Gemäß einer weiteren Weiterbildung des erfindungsgemäßen Transportbehälters bedeckt die Vielzahl an Vertiefungen einen Großteil der zum Innenraum weisenden Seitenfläche des Tragegriffs. Entsprechend zieht sich die Hohlraumaufteilung über die gesamte innere Seitenfläche des Tragegriffs, so dass eine insgesamt hohe Festigkeit und Profilsteifigkeit des Tragegriffs erreicht wird.

Gemäß einer weiteren Weiterbildung des erfindungsgemäßen Transportbehälters bilden die sechs- oder mehreckigen Hohlräume jeweils eine Wabenform aus, vorzugsweise eine sechseckige Wabe, d.h. in Form einer Bienenwabe, bei der sich die Geometrie kreisähnlich darstellt. Entsprechend werden die Hebelärme der Drehmomente im Tragegriff verkürzt, wodurch eine höhere Profilsteifigkeit erzielt werden kann.

Gemäß einer weiteren Weiterbildung des erfindungsgemäßen Transportbehälters umfasst die Vielzahl an Vertiefungen sechs vollständige sechseckige Hohlräume und einen vollständigen spitzrautenförmig ausgebildeten Hohlraum, die sich jeweils Stegwände als Seitenwände teilen. Dabei ist der vollständige spitzrautenförmig ausgebildete Hohlraum in der Mitte zwischen den sechs vollständigen sechseckigen Hohlräumen angeordnet, d.h. jeweils drei vollständige sechseckige Hohlräume sind auf jeder Seite des vollständigen spitzrautenförmig ausgebildeten Hohlraums angeordnet, wobei jede Seite der Raute an eine Seite eines vollständigen sechseckigen Hohlraums angrenzt, sich also diese Seiten einen geraden Stegwandabschnitt teilen. Die sich durch diese Verteilung ergebende Verbindung der Stegwandabschnitte über die miteinander verbundenen sechs vollständigen sechseckigen Hohlräume und ein vollständig spitzrautenförmig ausgebildeter Hohlraum zeigen eine kurze Gestalt, so dass die Hebelärme der Drehmomente im Tragegriff verkürzt werden, wodurch eine hohe Profilsteifigkeit des gesamten Tragegriffs erzielt werden kann.

Gemäß einer weiteren Weiterbildung des erfindungsgemäßen Transportbehälters sind alle Seitenwände des Transportbehälters mit einem Tragegriff und mit einem daran angrenzenden Durchgriffsloch versehen. Jeder Transportbehälter weist entsprechend 4 Tragegriffe mit daran angrenzendem Durchgriffsloch auf. Demnach kann der Benutzer den Transportbehälter auf verschiedene Arten greifen, wobei jeder Tragegriff die hohe Profilsteifigkeit und hohe Festigkeit aufweist.

Gemäß einer weiteren Weiterbildung des erfindungsgemäßen Transportbehälters ist der Transportbehälter einstückig als Spritzgussteil ausgestaltet. Vorzugsweise ist das Material des Transportbehälters ein Kunststoff, so zum Beispiel ein Kunststoff ausgewählt aus Polyethylen hoher Dichte (HDPE) und/oder Polypropylen (PP).

Erfindungsgemäß wird auch ein Spritzgussverfahren zur Herstellung eines wie vorhergehend definierten Transportbehälters bereitgestellt. Dabei wird der Transportbehälter durch Formspritzen einer Kunststoffmasse in eine Spritzgussform eines Spritzgusswerkzeugs in einem Arbeitsgang ausgeformt. Ein Teil des Spritzgusswerkzeugs, der den Innenraum des Transportbehälters abbildet, weist eine Vielzahl von Kugelkalotten auf, die die Innenoberfläche der sechs- oder mehreckigen Hohlräume zumindest eines Tragegriffs des Transportbehälters ausbilden. Durch die Formgebung der Innenoberfläche der Vertiefungen in Kugelkalottenform kann die bereits angesprochene bessere Kühlfähigkeit des eingespritzten Kunststoffs aufgrund der größeren Oberflächenanlage erzielt werden, da bei der Herstellung des Transportbehälters mit einer größeren Kühlfläche bzw. Werkzeuganlagefläche gearbeitet werden kann.

Erfindungsgemäß wird ferner ein Spritzgusswerkzeug zur Herstellung eines wie vorhergehend definierten Transportbehälters bereitgestellt, vorzugsweise mittels des vorhergehend genannten erfindungsgemäßen Spritzgussverfahrens, wobei das Spritzgusswerkzeug ein mehrteiliges Werkzeug ist. Ein beweglicher Teil des Spritzgusswerkzeugs, der den Innenraum des Transportbehälters abbildet, weist dabei eine Vielzahl von Kugelkalotten auf, welche dazu vorgesehen sind, um die Innenoberfläche der sechs- oder mehreckigen Hohlräume zumindest eines Tragegriffs des Transportbehälters ausbilden. Durch die Formgebung der Innenoberfläche der Vertiefungen in Kugelkalottenform kann die bereits angesprochene bessere Kühlfähigkeit des eingespritzten Kunststoffs aufgrund der größeren Oberflächenanlage erzielt werden, da bei der Herstellung des Transportbehälters mit einer größeren Kühlfläche bzw. Werkzeuganlagefläche gearbeitet werden kann.

Gemäß einer Weiterbildung des oben genannten erfindungsgemäßen Spritzgussverfahrens als auch des erfindungsgemäßen Spritzgusswerkzeugs besteht jede Kugelkalotte aus einem Werkstoff mit einer Wärmeleitfähigkeit von mehr als 60 W/m*K besteht, vorzugsweise Rotbronze, d.h. G-CuSn7ZnPb oder RG7, CuSn12, CuSn8, CuAl10Ni. Durch diese Materialwahl wird eine erhöhte Kühlleistung erzielt, wodurch mehr Watt pro Meter-Kelvin (W/(m·K)) abgeführt werden können.

### Vorteile der Erfindung

Durch die Hohlraumstruktur im Griffbereich des erfindungsgemäßen Transportbehälters, bei dem jeder Innenbereich eines Hohlraums durch eine am Boden liegende Kalotte bzw. Kugelabschnitt ausgeformt ist, wird eine vergrößerte Oberfläche im Griffbereich zur Auflage mit einem Spritzgusswerkzeug erzielt. Aufgrund der Tatsache, dass der Griffbereich eines Transportbehälters einen sogenannten "Hotspot" nach der Entformung des Spritzlings aus dem Spritzgusswerkzeug darstellt, führt die vorliegende Erfindung im Vergleich zu anderen bekannten Griffvarianten, wie zum Beispiel einem Lamellengriff, zu einer verbesserten bzw. erhöhten Wärmeabfuhr an das als Kunststoffspritzgussform wirkende Spritzgusswerkzeug beim Entformen. Vorteilhaft ist dabei also eine bessere Kühlfähigkeit des eingespritzten Kunststoffs aufgrund der größeren Oberflächenanlage, da mit einer größeren Kühlfläche bzw. Werkzeuganlagefläche gearbeitet werden kann. Entsprechend können dadurch mehr Watt pro Meter-Kelvin (W/(m·K)) abgeführt werden. Hieraus resultierten auch eine bessere Produktqualität auf Grund der Reduktion von Einfallstellen an der Außenseite des fertigen Spritzgussprodukts. Kurz gesagt, der erfindungsgemäße "Wabengriff" soll anstelle des bereits bekannten Lamellengriff bzw. anstelle hohlgeblasener Griffe an z.B. Getränkekästen Verwendung finden und die angesprochenen Vorteile erzielen.

Bei dem erfindungsgemäßen Spritzgusswerkzeug können spezielle Legierungen mit einer gegenüber z.B. Werkzeugstahl hohen Wärmeleitfähigkeit zum Einsatz kommen, um die Übertragung der sich im Spritzling nach dem Spritzgussvorgang befindlichen Wärmemenge an die Wand des Kunststoffspritzgusswerkzeuges zu verbessern. Dabei kann beispielsweise sog. Rotbronze eingesetzt werden, welche eine bis zu zehn Mal höhere Wärmeleitfähigkeit als Werkzeugstahl bietet. Die Entformungstemperatur des Spritzlings stellt einen entscheidenden Faktor für die wirtschaftlich äußerst relevante Herstellungszykluszeit des Transportbehälters dar. Die Herstellungszykluszeit eines Transportbehälters kann mit der vorliegenden Erfindung signifikant verkürzt werden, beispielsweise um 10-20%. Da üblicherweise im Spritzling beim Spritzgussvorgang ein ungleich verteiltes Temperaturprofil vorliegt, kann es generell bei Entformung aus dem Kunststoffspritzgusswerkzeug zu ungleichmäßiger Schwindung und damit zu Verzug am Spritzling kommen. Diese unvorteilhaften Vorgänge werden durch den erfindungsgemäßen Transportbehälter verringert bzw. vermieden.

Durch Verwendung des erfindungsgemäßen Spritzgusswerkzeugs befindet sich die Holraumstruktur des Tragegriffes des erfindungsgemäßen Transportbehälters nun dort, wo üblicherweise bisher eine Bindenaht der aufeinander treffenden Fließfronten entstanden ist. Eine derartige Bindenaht liegt bzw. lag bei bisher bekannten Flaschenkästen stets im Griffbereich vor, da der Kasten beim Spritzgießen vom Kastenboden aus angespritzt wird. Durch den erfindungsgemäßen Transportbehälter kann nun eine höhere Nukleierung bzw. Vernetzung an dem Ort der aufeinander treffenden Fließfronten im Griffbereich erzielt werden. Dies führt zu einer erhöhten Schlagfestigkeit, Zugfestigkeit und Bruchdehnung im Griffbereich, also zu einer insgesamt höheren Festigkeit.

Durch die Hohlraumstruktur im Griffbereich des erfindungsgemäßen Transportbehälters kann eine elastische Verformung verringert werden, d.h. die Profilsteifigkeit im Griffbereich wird signifikant erhöht. Die Steifigkeit des gesamten Griffs ist dabei durch die erfindungsgemäße Hohlraumanordnung, z.B. durch die erfindungsgemäßen Waben, dem bekannten Lamellengriff überlegen. Auf Grund der Geometrie der Hohlräume, insbesondere in Form der Wabe - ähnlich der Logik einer Bienenwabe, in welcher sich die Geometrie kreisähnlich darstellt - werden die Hebelärme der Drehmomente im Tragegriff verkürzt, wodurch die höhere Profilsteifigkeit erzielt werden kann.

Ferner können bei der Hohlraumstruktur im Griffbereich des erfindungsgemäßen Transportbehälters die Hohlraumdurchmesser der Hohlraumstruktur auf einen bestimmte Handgröße ausgelegt werden, so dass die Finger eines Benutzers beim Greifen des Tragegriffes auf eine gerade Fläche fallen, was unter ergonomischen Gesichtspunkten vorteilhaft ist, da es gemeinhin als haptisch ansprechender empfunden wird.

Zusammenfasst liegen die Vorteile des "Wabengriffs" im Vergleich zu anderen bisher bekannten Griffformen in der Materialeinsparung, der erhöhten Kühlfähigkeit, der verkürzten Herstellungszykluszeit, der höheren Stabilität und der ergonomisch günstigeren Gestaltung.

Wie hier und auch in den beigefügten Ansprüchen eventuell verwendet, können die Singularformen "ein"/"eine"/"einer" und "der"/"die"/"das" auch deren Plural umfassen, sofern der Kontext nicht eindeutig etwas anderes vorgibt. In ähnlicher Weise sind die Wörter "umfassen", "enthalten" und "aufweisen" sowohl als "ausschließlich" als auch "nicht ausschließlich" zu verstehen, also im Sinne von "einschließlich, aber nicht beschränkt auf...". Die Begriffe "mehrere", "Vielfaches" oder "Vielzahl" beziehen sich üblicherweise auf zwei oder mehr, d.h. 2 oder >2, einschließlich weiterer ganzzahliger Vielfacher von 1, wobei sich die Begriffe "einzeln" oder "allein" auf eins (1) beziehen, also "=1". Ferner ist der Ausdruck "mindestens eins" oder "wenigstens eins" als eins oder mehrere, d.h. 1 oder >1, ebenfalls mit ganzzahligen Vielfachen, zu verstehen. Außerdem sollen sich die Wörter "hierin", "oben", "vorher" und "unten" oder "nachfolgend" und Wörter mit ähnlicher Bedeutung, wenn sie in dieser Beschreibung verwendet werden, auf diese Beschreibung insgesamt und nicht auf bestimmte Teile der Beschreibung beziehen.

Die in dieser Beschreibung angegebenen Maße sind dabei jeweils so zu verstehen, dass übliche Toleranzen mit umfasst sind. Bei den auf die Abmessungen des Kastens bezogenen Angaben gelten insbesondere Abweichungen vom Sollmaß im Bereich von +0,5% und -1,0 % als innerhalb der zulässigen Toleranz. Bei auf eine Flasche bezogenen Maßangaben gelten für den Durchmesser insbesondere Abweichungen von bis zu +/- 1,3 mm und bei der Höhe von +/- 1,5 mm als innerhalb der zulässigen Toleranz.

Die Beschreibung spezifischer Ausführungsformen in dieser Schrift soll nicht als erschöpfend angesehen werden, oder die hierin gegebene Offenbarung soll nicht auf die genaue offenbarte Form beschränkt werden. Während hierin beschriebene spezifische Ausführungsformen und Beispiele für die Offenbarung zur Veranschaulichung dienen, sind verschiedene äquivalente Modifikationen innerhalb des Schutzumfangs der Offenbarung möglich, wie es von einem Fachmann auf dem vorliegenden technischen Gebiet erkennbar ist. Spezielle technische Elemente von beschriebenen Ausführungsformen können für technische Elemente in anderen Ausführungsformen kombiniert oder durch diese ersetzt werden. In den Zeichnungen bezeichnen gleiche Bezugszeichen gleiche Elemente, um Wiederholungen zu vermeiden, und Teile, die der Fachmann ohne spezielles Wissen umsetzen kann, können aus Gründen der Übersichtlichkeit weggelassen werden. Während Vorteile, die bestimmten Ausführungsformen der Offenbarung zugeordnet sind, im Zusammenhang mit diesen Ausführungsformen beschrieben werden, können andere Ausführungsformen ebenfalls diese Vorteile aufweisen.

Merkmale, die zuvor zu einer Ausführungsform des erfindungsgemäßen Transportbehälters beschrieben wurden können sinngemäß auch zur Definition des erfindungsgemäßen Verfahrens und zur Definition des erfindungsgemäßen Werkzeugs verwendet werden und sind hiermit ausdrücklich auch als Verfahrens- und/oder Werkzeugmerkmale offenbart. Gleiches gilt in die andere Richtung, Merkmale die nur zum erfindungsgemäßen Verfahren oder zum erfindungsgemäßen Werkzeug offenbart sind können auch zur Definition des erfindungsgemäßen Transportbehälters verwendet werden.

Die nachfolgenden Ausführungsformen sollen verschiedene mögliche Modifikationen der vorliegenden Erfindung veranschaulichen. Als solche sind alle spezifischen technischen Details, wie sie nachfolgend ebenfalls diskutiert werden, nicht als Beschränkungen des Umfangs der vorliegenden Erfindung auszulegen. Für den Fachmann ist es offensichtlich, dass verschiedene Abwandlungen und Änderungen vorgenommen werden können, ohne von dem Schutzbereich der vorliegenden Anmeldung abzuweichen, wie er durch die angehängten Ansprüche festgelegt ist. Weitere Aspekte und Vorteile der vorliegenden Erfindung ergeben sich aus der folgenden Beschreibung der bevorzugten, in den Figuren dargestellten Ausführungsformen.

### Kurze Beschreibung der Figuren

Ausführungsbeispiele der Erfindung sind in den Zeichnungen dargestellt und in der nachfolgenden Beschreibung näher erläutert. Es zeigen:
- Figur 1: eine perspektivische schematische Darstellung eines erfindungsgemäßen Transportbehälters;
- Figur 2: eine perspektivische schematische Detaildarstellung eines Tragegriffs auf der kurzen Seite des in Figur 1 dargestellten erfindungsgemäßen Transportbehälters;
- Figur 3: eine in 3D abgebildete perspektivische Detaildarstellung des in Figur 2 gezeigten Tragegriffs; und
- Figur 4: eine perspektivische schematische Detaildarstellung eines Tragegriffs auf der langen Seite des in Figur 1 dargestellten erfindungsgemäßen Transportbehälters.

### Ausführungsformen der Erfindung

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

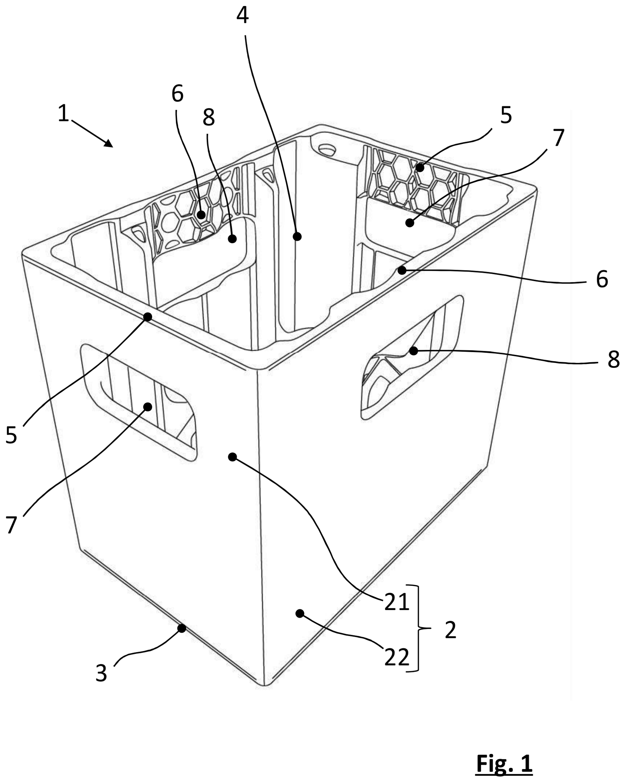

Figur 1 ist eine perspektivische Darstellung eines erfindungsgemäßen Transportbehälters 1 in Form eines Flaschenkastens. Der Transportbehälter 1 weist einen Behälterrahmen 2 und einen Behälterboden 3 auf, die einen Behälterinnenraum 4 des Transportbehälters festlegen, in dem das zu transportierende Gut aufgenommen werden kann, in dem vorliegenden Fall Flaschen innerhalb eines Gefaches des Transportbehälters 1. Der Behälterrahmen 2 besteht in dem dargestellten Ausführungsbeispiel aus 2 sich gegenüberliegenden kurzen Seitenwänden 21 und zwei sich gegenüberliegenden langen Seitenwänden 22. Der Transportbehälter 1 kann jedoch auch vier gleichlange Seitenwände aufweisen.

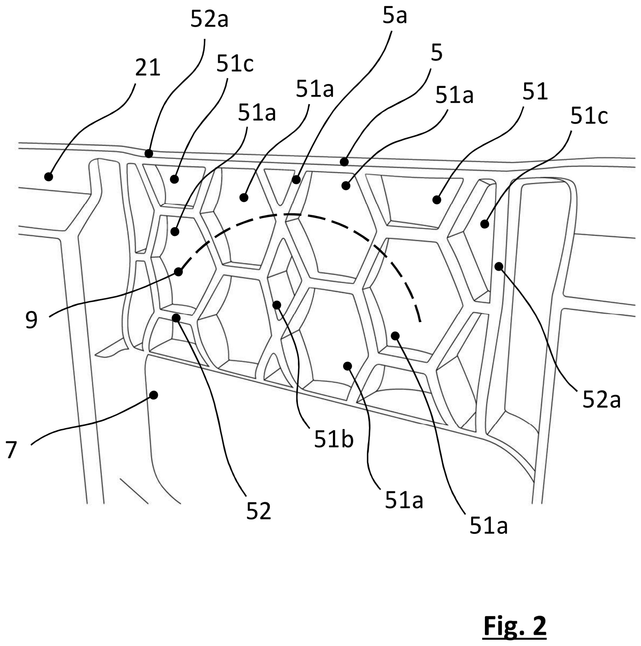

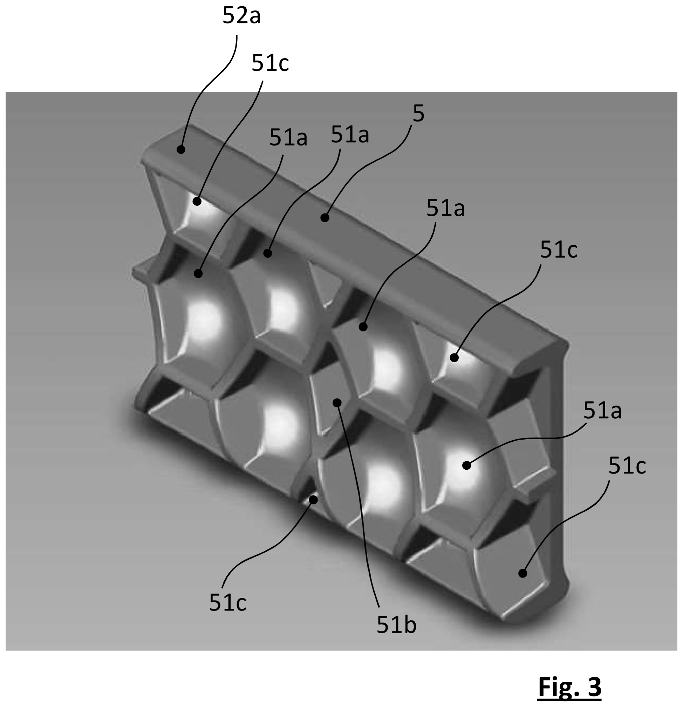

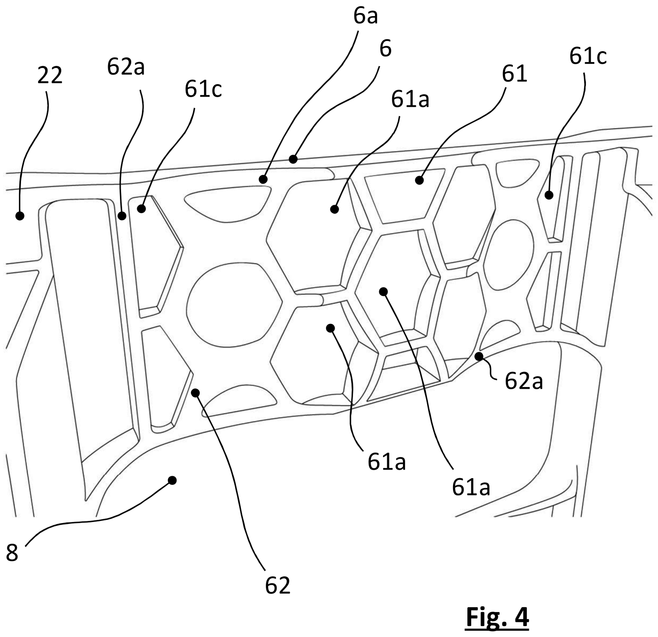

Jede kurze Seitenwand 21 in dem dargestellten Ausführungsbeispiel hat einen Tragegriff 5, der im Detail in Figuren 2 und 3 dargestellt ist. Jede lange Seitenwand 22 hat einen Tragegriff 6, der im Detail in Figur 4 dargestellt ist. Unter jedem der Tragegriffe 5, 6 ist ein Durchgriffsloch bzw. eine Durchgriffsöffnung 7, 8 in der jeweiligen Seitenwand 21, 22 vorgesehen, durch die ein Benutzer den Transportbehälter 1 an den Tragegriffen 5, 6 greifen kann, wobei sich die Finger des Benutzers durch das jeweilige Durchgriffsloch 7, 8 hindurch erstrecken und an einer Innenseite des Tragegriffs 5, 6 zum Anliegen kommen, wodurch ein festes Greifen des Transportbehälters 1 durch den Benutzer ermöglicht wird. Die Innenseiten der Tragegriffe 5, 6 stellen dabei einen Teil einer zum Innenraum 4 weisende Seitenfläche 5a, 6a der entsprechenden Seitenwand 21, 22 dar.

Bei dem dargestellten Transportbehälter1 weist jeder Tragegriff 5, 6 an seiner Innenseite eine Vielzahl an Vertiefungen 51, 61 auf. Die Vertiefungen 51, 61 umfassen zumindest u.a. vier sechs- oder mehreckige Hohlräume 51a, 61a, die Fingermulden für den Eingriff durch den Benutzer bieten, wobei alle Vertiefungen 51, 61 an der zum Innenraum 4 hinweisenden Seite offen sind und an den Seiten durch Stegwände 52, 62 begrenzt sind. Jeder der sechs- oder mehreckige Hohlräume 51a, 61a hat einen minimalen Umkreisdurchmesser von 20 mm, was dazu dient, dass jede Fingerkuppe einer sogenannten "Normhand" in die jeweilige Fingermulde eingreifen und darin aufliegen kann. Die zum Innenraum 4 offenen Vertiefungen 51, 61 sind an deren jeweiliger Innenoberfläche zumindest teilweise einer Kugelsegmentform nachfolgend ausbildet, also an deren inneren Enden der Form eines Kugelsegments nachgebildet, wie es am besten in der 3D-Darstellung von Figur 3 zu sehen ist. Entsprechend ist dabei der Boden der jeweiligen Vertiefung 51, 61 der Kugelsegmentform nachempfunden, wodurch eine nach innen gerichtete kuppelartige Ausformung der jeweiligen Vertiefung 51, 61 erreicht wird. Durch diese Formgebung der Vertiefungen 51, 61 gemäß einer Kugelkalotte kann neben der statisch vorteilhaften Struktur eine bessere Kühlfähigkeit des eingespritzten Kunststoffs aufgrund der größeren Oberflächenanlage durch das entsprechende Werkzeug erzielt werden. Entsprechend kann bei der Herstellung des Transportbehälters 1 mit einer größeren Kühlfläche bzw. Werkzeuganlagefläche gearbeitet werden, wodurch die Abkühlung des Spritzlings verkürzt und dadurch die Transportbehälterherstellungszykluszeit signifikant verkürzt werden kann.

Wie es in Figuren 2 bis 4 zu sehen ist, umfasst die Vielzahl an Vertiefungen 51, 61 vollständig ausgebildete sechseckige Hohlräume 51a, 61a sowie teilgeschnittene Hohlräume 51c, 61c, wobei die teilgeschnittenen Hohlräume 51c, 61c an deren Schnitte durch Stegwände 52a, 62a begrenzt sind, die eine generelle Außenform des jeweiligen Tragegriffs 5, 6 festlegen, also die Außenwände des jeweiligen Transportgriffs 5, 6 darstellen.

Wie es in Figuren 1 bis 3 zu sehen ist, sind bei dem Tragegriff 5 der kurzen Seitenwand 21 vier der sechs- oder mehreckigen Hohlräume 51 einem Kreisbogen 9 folgend zueinander angeordnet, d.h. die Mittelpunkte der vier sechs- oder mehreckigen Hohlräume 51 des Tragegriffs 5 liegen auf dem Kreisbogen 9, der in Figur 2 anhand einer gestrichelten Linie schematisch dargestellt ist. Darüber hinaus weist der Tragegriff 5 einen vollständig ausgebildeten spitzrautenförmigen Hohlraum 51b auf, der an zwei der vier auf dem Kreisbogen 9 liegenden Hohlräume 51a angrenzt, und insgesamt an 4 der sechseckigen Hohlräume angrenzt. Der spitzrautenförmige Hohlraum 51b ist in der Mitte des Tragegriffs 5 mit seiner längsten Dimension quer zur Längserstreckung des Tragegriffs 5 angeordnet, wobei sich seine längste Erstreckung in einer Richtung erstreckt, die quer zur Längsrichtung des Tragegriffs 5 verläuft, in der Darstellung in Figur 2 also in einer vertikalen Richtung. Der spitzrautenförmige Hohlraum 51b liegt mit seiner mittigen Ausrichtung nun an der Stelle des Transportbehälters 1, an der üblicherweise eine Bindenaht von aufeinander treffenden Fließfronten beim Spritzgießen eines derartigen Transportbehälters 1 entsteht, die hier stets im Griffbereich des Transportbehälters 1 vorliegt, da dieser beim Spritzgießen vom Kastenboden 3 aus angespritzt wird. Durch den erfindungsgemäßen Transportbehälter 1 wird nun durch die besondere Formgebung der Tragegriffe 5, 6, und insbesondere durch die Strukturverstärkung durch die Rautenausführung in Kombination mit den umliegenden Wabenhohlräumen eine höhere Nukleierung bzw. Vernetzung an dem Ort der aufeinander treffenden Fließfronten im Griffbereich erzielt.

Wie es in Figur 4 zu sehen ist, zeigt der Tragegriff 6 der langen Seitenwand 22 eine zum Tragegriff 5 im Wesentlichen ähnliche Ausführung, wobei durch die größere Länge des Tragegriffs 6 in der Griffmitte anstelle des spitzrautenförmige Hohlraum 51b des Tragegriffs 5 hier weitere sechseckige Hohlräume bzw. Wabenhohlräume vorgesehen sind. Durch die im Querschnitt insgesamt wellige Ausführung des Tragegriffs 6 bei der hier dargestellten Ausführungsform des erfindungsgemäßen Transportbehälters 1 sind einige der Vertiefungen 61 von der Seite des Innenraums 4 her entsprechend wellig abgeschnitten. Die zum Innenraum 4 hin offenen Vertiefungen 61 sind an deren jeweiliger Innenoberfläche zumindest teilweise einer Kugelsegmentform nachfolgend ausbildet, also an deren inneren Enden der Form eines Kugelsegments nachgebildet. Entsprechend ist dabei der Boden der jeweiligen Vertiefung 61 der Kugelsegmentform nachempfunden, wodurch wieder eine nach innen gerichtete kuppelartige Ausformung der jeweiligen Vertiefung 61 erreicht wird. Durch diese Formgebung der Vertiefungen 61 gemäß einer Kugelkalotte kann neben der statisch vorteilhaften Struktur eine bessere Kühlfähigkeit des eingespritzten Kunststoffs aufgrund der größeren Oberflächenanlage durch das entsprechende Werkzeug erzielt werden.

Entsprechend kommt insgesamt bei der Herstellung des Transportbehälters 1 eine gegenüber der bisher bekannten Transportbehälterspritzgussherstellung größere Kühlfläche bzw. Werkzeuganlagefläche zur Anwendung, wodurch die notwendige Abkühlzeit des Spritzlings verkürzt und dadurch die Transportbehälterherstellungszykluszeit signifikant verkürzt werden kann.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 1: Transportbehälter / Flaschenkasten
- 2: Behälterrahmen / Kastenrahmen
- 21: kurze Seitenwand
- 22: lange Seitenwand
- 3: Behälterboden / Kastenboden
- 4: Behälterinnenraum / Kasteninnenraum
- 5: Tragegriff kurze Seite
- 5a: zum Innenraum weisende Seitenfläche
- 51: Vertiefung
- 51a: sechs- oder mehreckiger Hohlraum
- 51b: spitzrautenförmig ausgebildeten Hohlraum
- 51c: teilgeschnittener Hohlraum
- 52: stegartige Wand / Stegwand
- 52a: die Außenform des Tragegriffs festlegende Stegwand
- 6: Tragegriff lange Seite
- 6a: zum Innenraum weisende Seitenfläche
- 61: Vertiefung
- 61a: sechs- oder mehreckiger Hohlraum
- 61c: teilgeschnittener Hohlraum
- 62: stegartige Wand / Stegwand
- 62a: die Außenform des Tragegriffs festlegende Stegwand
- 7: Durchgriffsloch kurze Seite
- 8: Durchgriffsloch lange Seite
- 9: Kreisbogen

## Patentansprüche

1. Transportbehälter (1), umfassend einen Behälterrahmen (2) und einen Behälterboden (3), wobei der Behälterrahmen (2) und der Behälterboden (3) einen Behälterinnenraum (4) festlegen, und wobei der Behälterrahmen (2) Seitenwände (21, 22) des Transportbehälters (1) ausbildet, von denen mindestens zwei gegenüberliegende Seitenwände (21, 22) mit einem Tragegriff (5, 6) und mit einem daran angrenzenden Durchgriffsloch (7, 8) versehen sind, **dadurch gekennzeichnet, dass**
der Tragegriff (5, 6) zumindest an seiner zum Behälterinnenraum (4) weisenden Seitenfläche (5a; 6a) eine Vielzahl an Vertiefungen (51; 61) aufweist, die zumindest vier sechs- oder mehreckige Hohlräume (51a; 61a) umfasst, deren jeweilige Innenoberfläche zumindest teilweise eine Kugelsegmentform ausbildet.

2. Transportbehälter (1) nach Anspruch 1, wobei die Kugelsegmentform einer Kugelkalotte nachgebildet ist.

3. Transportbehälter (1) nach Anspruch 1 oder 2, wobei jede Vertiefung (51; 61) von stegartigen Wänden (52; 62) umgeben ist.

4. Transportbehälter (1) nach einem der vorangehenden Ansprüche, wobei
4a) die zumindest vier der sechs- oder mehreckigen Hohlräume (51a) einem Kreisbogen (9) folgend zueinander angeordnet sind;
4b) jeder der zumindest vier der sechs- oder mehreckigen Hohlräume (51a; 61a) eine Fingermulde ausbildet; und/oder
4c) jeder der zumindest vier der sechs- oder mehreckigen Hohlräume (51a; 61a) einen minimalen Umkreisdurchmesser von 20 mm aufweisen.

5. Transportbehälter (1) nach einem der vorangehenden Ansprüche, wobei
5a) die Vielzahl an Vertiefungen (51; 61) ferner zumindest einen spitzrautenförmig ausgebildeten Hohlraum (51b) aufweist, der an zwei der zumindest vier der sechs- oder mehreckigen Hohlräume (51a) angrenzt und der in der Mitte des Tragegriffs (5) mit seiner längsten Dimension quer zur Längserstreckung des Tragegriffs (5) angeordnet ist; und/oder
5b) die Vielzahl an Vertiefungen (51; 61) ferner zumindest einen teilgeschnittenen Hohlraum (51c; 61c) aufweist, dessen angedachte Form nur zum Teil ausgebildet ist und der an dessen geschnittener Seite durch eine die Außenform des Tragegriffs (5; 6) festlegende Stegwand (52a; 62a) begrenzt ist.

6. Transportbehälter (1) nach einem der vorangehenden Ansprüche, wobei die Vielzahl an Vertiefungen (51; 61)
6a) einen Großteil der zum Innenraum weisenden Seitenfläche (5a; 6a) des Tragegriffs (5, 6) bedeckt; oder
6b) die gesamte zum Innenraum weisende Seitenfläche (5a; 6a) des Tragegriffs (5; 6) bedeckt.

7. Transportbehälter (1) nach einem der vorangehenden Ansprüche, wobei die sechs- oder mehreckigen Hohlräume (51a; 61a) jeweils eine Wabenform ausbilden.

8. Transportbehälter (1) nach einem der vorangehenden Ansprüche, wobei die Vielzahl an Vertiefungen sechs vollständige sechseckige Hohlräume (51a) und einen vollständigen spitzrautenförmig ausgebildeten Hohlraum (51b) umfasst.

9. Transportbehälter (1) nach einem der vorangehenden Ansprüche, wobei alle Seitenwände (21, 22) mit einem Tragegriff (5, 6) und mit einem daran angrenzenden Durchgriffsloch (7, 8) versehen sind.

10. Transportbehälter (1) nach einem der vorangehenden Ansprüche, wobei
10a) der Transportbehälter (1) einstückig als Spritzgussteil ausgestaltet ist; und/oder
10b) das Material des Transportbehälters (1) ein Kunststoff ist, vorzugsweise wobei der Kunststoff ausgewählt ist aus Polyethylen hoher Dichte (HDPE) und/oder Polypropylen (PP).

11. Transportbehälter (1) nach einem der vorangehenden Ansprüche, wobei der Transportbehälter (1) ein Flaschenkasten (1) zur Aufnahme von Flaschen oder Flaschengebinden ist.

12. Spritzgussverfahren zur Herstellung eines Transportbehälters (1) nach einem der vorangehenden Ansprüche, wobei der Transportbehälter (1) durch Formspritzen einer Kunststoffmasse in eine Spritzgussform eines Spritzgusswerkzeugs in einem Arbeitsgang ausgeformt wird, **dadurch gekennzeichnet, dass**
ein Teil des Spritzgusswerkzeugs, der den Innenraum des Transportbehälters (1) abbildet, eine Vielzahl von Kugelkalotten aufweist, die die Innenoberfläche der sechs- oder mehreckigen Hohlräume (51a; 61a) zumindest eines Tragegriffs (5, 6) des Transportbehälters (1) ausbilden.

13. Verfahren nach Anspruch 12, wobei jede Kugelkalotte aus einem Werkstoff mit einer Wärmeleitfähigkeit von mehr als 60 W/m*K besteht, vorzugsweise wobei jede Kugelkalotte aus Rotbronze besteht.

14. Spritzgusswerkzeug zur Herstellung eines Transportbehälters (1) nach einem der Ansprüche 1 bis 11, wobei das Spritzgusswerkzeug ein mehrteiliges Werkzeug ist, **dadurch gekennzeichnet, dass**
ein beweglicher Teil des Spritzgusswerkzeugs, der den Innenraum (4) des Transportbehälters (1) abbildet, eine Vielzahl von Kugelkalotten aufweist, welche dazu vorgesehen sind, um die Innenoberfläche der sechs- oder mehreckigen Hohlräume (51a; 61a) zumindest eines Tragegriffs (5, 6) des Transportbehälters (1) ausbilden.

15. Spritzgusswerkzeug nach Anspruch 14, wobei jede Kugelkalotte aus einem Werkstoff mit einer Wärmeleitfähigkeit von mehr als 60 W/m*K besteht, vorzugsweise wobei jede Kugelkalotte aus Rotbronze besteht.
